# EUROPEAN PATENT SPECIFICATION

(11) **EP 1 975 474 B1**
(45) Date of publication and mention of the grant of the patent: **14.03.2012**
(21) Application number: 08251179.1
(22) Date of filing: 28.03.2008
(51) Int. Cl.: F16H 61/662

(54) **Continuously variable transmission**
Stufenlos verstellbares Getriebe
Transmission variable continue

(30) Priority: 30.03.2007 JP 2007094033; 21.09.2007 JP 2007246274
(43) Date of publication of application: 01.10.2008
(73) Proprietor: Yamaha Hatsudoki Kabushiki Kaisha, Shizuoka-ken Shizuoka 438-8501 (JP)
(72) Inventor: Asaoka, Ryousuke, Shizuoka-ken 438-8501 (JP); Aoki, Hiroyuki, Shizuoka-ken 438-8501 (JP)
(74) Representative: Moreland, David

(56) References cited:
- EP-A1- 1 089 025
- EP-A1- 1 767 827
- EP-A2- 1 340 929

## Description

### FIELD OF THE INVENTION

The present invention relates to a continuously variable transmission, a vehicle (for example, a motorcycle), and a power unit.

### BACKGROUND TO THE INVENTION

In straddle-type vehicles, such as scooter motorcycles, a V-belt type continuously variable transmission is widely used. V-belt type continuously variable transmissions typically include a primary shaft to which output of a power source, such as an engine, is input, a secondary shaft that extracts output to be transmitted to a driving wheel, and a paired primary sheave and a secondary sheave that are respectively disposed on the primary shaft and the secondary shaft. The groove width of each of the sheaves is designed to be variable, and a V-belt is wound around the sheaves. The V-belt type continuously variable transmission has a groove width adjustment mechanism that is used to vary the groove width of each sheave. As a result, the winding diameter of the V-belt around each sheave is adjusted to adjust the speed change ratio between the sheaves in a continuously variable manner.

Normally, the primary sheave and the secondary sheave are formed by a fixed flange and a movable flange that form a V groove therebetween. Each movable flange is provided such that it can move in an axial direction of the primary shaft or the secondary shaft. The groove width adjustment mechanism moves the moveable flange to adjust the speed change ratio in a continuously variable manner.

V-belt type continuously variable transmissions of this type are known in which an electric motor is used to move a movable flange of a primary sheave, thereby adjusting the groove width. The movement driving force of the electric motor moves the moveable flange in either a direction that narrows the width of the primary sheave (a Top side) or a direction that widens the width of the groove of the primary sheave (a Low side), thereby allowing adjustment of the groove width. Such an arrangement is disclosed in, for example, JP-A-04-210156. Other examples are disclosed in JP-A-04-131558 and JP-A-7-119804.

A scooter motorcycle provided with a mechanism for electronically controlling a V-belt type continuously variable transmission automatically changes the speed change ratio without requiring the rider to perform any operations, based on a program or map that has been input in advance for the vehicle speed and the engine speed. Accordingly, the rider' s driving operation becomes simpler, and attempts have been made to apply this automatic continuously variable transmission to various types of vehicles.

Document EP1767827 which is considered being the closest prior art, discloses a continuously variable transmission comprising a control device having a plurality of driving modes set therein, wherein the control device is adapted to perform a control that switches between the plurality of driving modes in response to operation of a mode switching operation member.

When a vehicle equipped with such a continuously variable transmission travels down a downward slope, the vehicle may coast down the downward slope by inertia with the engine stopped. In this case, if a mechanism that changes the speed change ratio in response to the vehicle speed is used, when the engine is started after a certain speed is reached, the clutch may be engaged immediately. At this time, there is a possibility that a problem will occur, namely, an unpleasant sensation will be felt because of an inconsistency between the rider's operation and the actual acceleration movement of the vehicle.

### SUMMARY OF THE INVENTION

Aspects of the present invention are set forth in the independent claims and relate to a transmission, a vehicle comprising a transmission and a power unit comprising a transmission.

Preferred but non-essential features of the invention are set forth in the dependent claims.

A straddle-type vehicle according to the invention is provided with an engine, a continuously variable transmission connected to the engine, and a control device that controls the continuously variable transmission. The straddle-type vehicle includes a mode switching operation member, and a plurality of driving modes are set in the control device. The control device performs a first control that switches, before start of the engine, the driving mode to a determined driving mode among the plurality of driving modes that has been determined in advance. Further, the control device performs a second control that switches between the plurality of driving modes in response to operation of the mode switching operation member. Furthermore, the control device performs a third control that limits the second control and inhibits switching from the determined driving mode to another driving mode, when the control device detects that the engine has not been started.

The invention may relate to a straddle-type vehicle provided with an engine having an output that is controlled in response to an accelerator operation member, a continuously variable transmission connected to the engine, and a control device that controls the continuously variable transmission, and comprising:
a mode switching operation member, wherein
a plurality of driving modes are set in the control device, and
the control device performs a first control that switches the driving mode, before start of the engine, to a determined driving mode among the plurality of driving modes that has been determined in advance;
a second control that switches between the plurality of driving modes in response to the mode switching operation member; and
a third control that limits the second control and inhibits switching from the determined driving mode to another driving mode, when the control device detects that the engine has not been started.

The invention may also relate to a straddle-type vehicle provided with an engine, a continuously variable transmission connected to the engine, and a control device that controls the continuously variable transmission, wherein:
a plurality of driving modes are set in the control device; and
when the control device detects that the engine has just been started and when the driving mode has not been switched to a determined driving mode among the plurality of driving modes that has been determined in advance, the control device performs a fourth control that switches the driving mode to the determined driving mode.

The invention may relate to a power unit provided with an engine, and a continuously variable transmission that is connected to the engine and controlled by a control device, wherein:
a plurality of driving modes are set in the control device, and
the control device performs
a first control that switches the driving mode, before start of the engine, to a determined driving mode among the plurality of driving modes that has been determined in advance;
a second control that switches between the plurality of driving modes in response to operation of the mode switching operation member; and
a third control that limits the second control and inhibits switching from the determined driving mode to another driving mode, when the control device detects that the engine has not been started.

The invention may also relate to a power unit for a straddle-type vehicle including an engine, a continuously variable transmission connected to the engine, and a control device that controls the continuously variable transmission, wherein:
a plurality of driving modes are set in the control device; and
when the control device detects that the engine has just been started and when the driving mode has not been switched to a determined driving mode among the plurality of driving modes that has been determined in advance , the control device performs a fourth control that switches the driving mode to the determined driving mode.

The invention may relate to a continuously variable transmission controlled by a control device, wherein
a plurality of driving modes are set in the control device, and
the control device performs
a first control that switches the driving mode, before start of an engine, to a determined driving mode among the plurality of driving modes that has been determined in advance ;
a second control that switches between the plurality of driving modes in response to operation of a mode switching operation member; and
a third control that limits the second control and inhibits switching from the determined driving mode to another driving mode, when the control device detects that the engine has not been started.

The invention may also relate to a continuously variable transmission controlled by a control device, wherein
a plurality of driving modes are set in the control device, and
when the control device detects that an engine has just been started and when the driving mode has not been switched to a determined driving mode among the plurality of driving modes that has been determined in advance, based on the detection result the control device performs a fourth control that switches the driving mode to the determined driving mode. According to the invention, the control device performs: the first control that switches the driving mode, before start of the engine, to the determined driving mode among the plurality of driving modes that has been determined in advance ; the second control that switches between the plurality of driving modes in response to operation of the mode switching operation member; and the third control that limits the second control and inhibits switching from the determined driving mode to the other driving mode, when the control device detects that the engine has not been started. Therefore, it is possible to fix the driving mode at the time of engine start in the determined driving mode, and to always start the vehicle in the same driving mode. Thus, drivability immediately after the start-up (when the vehicle is starting) can be maintained at a constant level.

In addition, when the control device detects that the engine has just been started and when the driving mode has not been switched to the determined driving mode among the plurality of driving modes that has been determined in advance, the control device performs a fourth control that switches the driving mode to the determined driving mode. In this case, even if a centrifugal clutch is engaged by starting the engine in a state where a certain speed is reached, for example, when running down a downward slope, it is possible to reduce an unpleasant sensation caused by an inconsistency between the rider's operation and the actual movement of the vehicle, thereby improving rider comfort.

### BRIEF DESCRIPTION OF THE DRAWINGS

These and other aspects of the present invention will now be described, by way of example only, with reference to the accompanying drawings, in which:
FIG. 1 is a view that shows the side structure of a straddle-type vehicle according to an embodiment of the invention;
FIG. 2 is a block diagram that diagrammatically represents a continuously variable transmission mounted in the straddle-type vehicle according to the embodiment of the invention and its peripheral structure;
FIG. 3 shows diagrams demonstrating driving modes set for the continuously variable transmission;
FIG. 4 shows a diagram that demonstrates driving modes set for the continuously variable transmission;
FIG. 5 is a flow chart of a control device according to the embodiment of the invention;
FIG. 6 is a block diagram that diagrammatically represents a continuously variable transmission and its peripheral structure according to another embodiment of the invention;
FIG. 7 is a flow chart of a control device according to the other embodiment of the invention;
FIG. 8 is a block diagram that diagrammatically represents a continuously variable transmission and its peripheral structure when the continuously variable transmission is a metal belt CVT; and
FIG. 9 is a diagram of a mechanism of a continuously variable transmission.

### DETAILED DESCRIPTION OF THE DRAWINGS

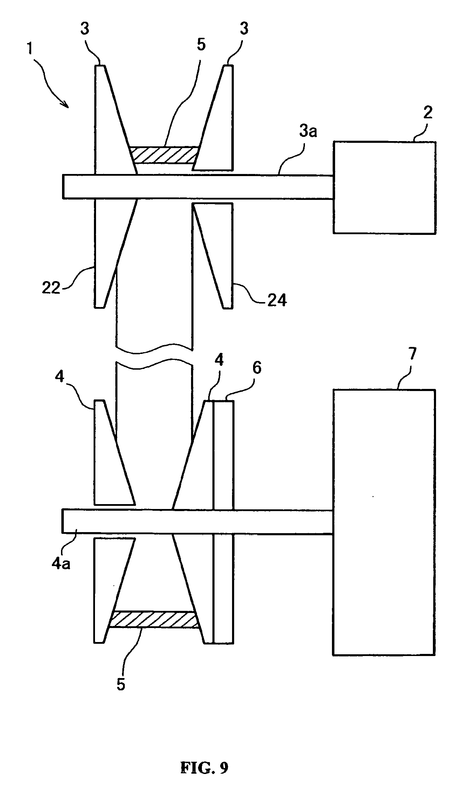

As shown in, for example, FIG. 9, a continuously variable transmission 1 includes a primary sheave 3 connected to a primary shaft 3a that is rotated by an engine 2, a secondary sheave 4 connected to a secondary shaft 4a that outputs power to a rear wheel (driving wheel) 7 via a centrifugal clutch 6, and a V-belt 5 wound around the primary sheave 3 and the secondary sheave 4. Further, a groove width adjustment mechanism is used to adjust the groove with of the primary sheave 3, thereby continuously adjusting the speed change ratio.

The continuously variable transmission 1 described above may include a mechanism for changing the speed change ratio in response to the vehicle speed when the vehicle runs down a downward slope with the engine 2 stopped. In this case, when the engine 2 is started in a state where a certain speed has been reached, an event may occur where shifting is rapidly performed based on a program (map) that has been input in advance for the vehicle speed and the engine speed. When such an event occurs, there is a possibility that the rotation speed of the secondary sheave 4 located downstream of the engine 2 will also increase, thus instantaneously engaging the centrifugal clutch 6. As a result, the feeling in this case is completely different from that in the case of clutch engagement when starting normally. As a result, an unpleasant sensation may be felt because of an inconsistency between the rider's operation and the actual vehicle movement. The inventors of the present invention have found that the unpleasant sensation caused by the inconsistency between the rider's operation and the vehicle movement may be felt depending on the engagement state of the centrifugal clutch 6, and have devised a mechanism that can reduce the unpleasant sensation being felt when the centrifugal clutch is engaged, thus achieving the present invention.

Hereinafter, embodiments of the invention will be described with reference to the drawings. In the following drawings, structural members that have the same or similar operations are denoted with the same or similar reference numerals and the description thereof will be omitted. Note that the invention is not limited to the following embodiments.

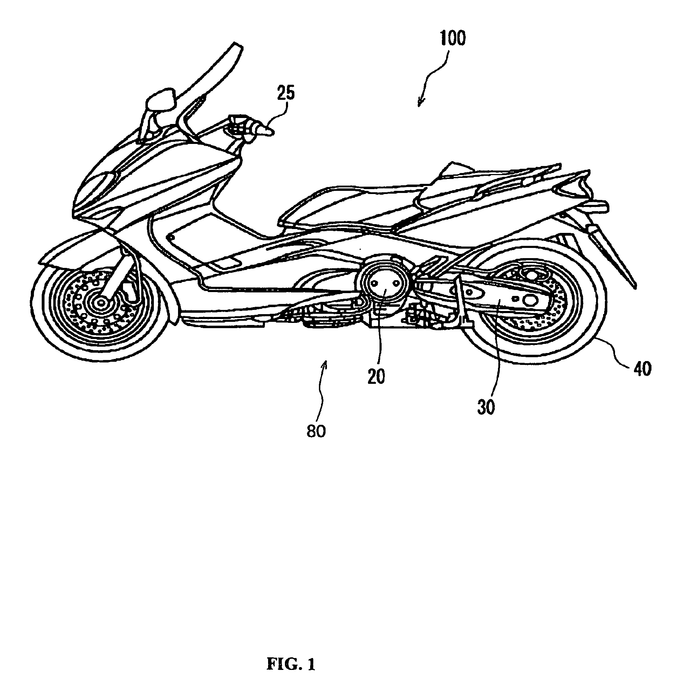

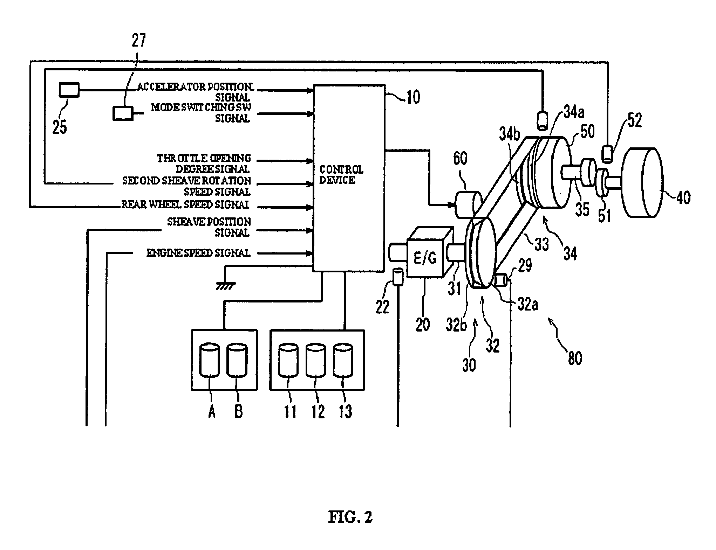

FIG. 1 shows the side structure of a straddle-type vehicle 100 according to an embodiment of the invention. FIG. 2 is a block diagram for illustrating a control device 10, and its peripheral configuration, installed in the straddle-type vehicle 100 according to the embodiment.

As shown in FIG. 2, the straddle-type vehicle 100 according to the embodiment includes a driving source (engine) 20 having an output that is controlled in response to an accelerator operation member 25 operated by a rider, a continuously variable transmission 30 connected to the engine 20, and a control device 10 that electronically controls the continuously variable transmission 30. Note that, in the embodiment, the engine 20 and the continuously variable transmission 30 form a power unit 80.

The straddle-type vehicle 100 shown in FIG. 1 is a scooter motorcycle, and driving force generated by the engine 20 is transmitted to a rear wheel (driving wheel) 40 through the continuously variable transmission 30. In the case of a motorcycle, the accelerator operation member 25 operated by the rider is either an accelerator attached to a handle or an accelerator grip.

The continuously variable transmission 30 according to the embodiment has a structure in which a primary sheave 32 is connected to a primary shaft 31 (for example, a crank shaft) that is rotated by the engine 20, a secondary sheave 34 is connected to a secondary shaft 35 that outputs power to the rear wheel 40 (driving wheel) via a centrifugal clutch 50 and a speed reduction mechanism 51, and a V-belt 33 is wound around the primary sheave 32 and the secondary sheave 34. Further, the speed change ratio is continuously and steplessly controlled by changing the groove width of each sheave.

The primary sheave 32 and the secondary sheave 34 are structured by fixed flanges 32a, 34a and movable flanges 32b, 34b that are respectively attached to the primary shaft 31 and the secondary shaft 35. The movable flanges 32b, 34b are provided such that they can move in the direction of the primary shaft 31 and in the direction of the secondary shaft 35, respectively. Note that the fixed flanges are also referred to as fixed sheaves, and the movable flanges are also referred to as movable sheaves.

The movable flange 34b of the secondary sheave 34 is urged in a direction that narrows the groove width by a groove width adjustment mechanism. The groove width adjustment mechanism of the embodiment is formed by a spring (not shown in the drawings) attached to the movable flange 34b, and a torque cam (not shown in the drawings) provided in a section of the movable flange 34b.

On the other hand, the groove width of the primary sheave 32 is adjusted by controlling the movement of the movable flange 32b of the primary sheave 32 (so as to slidably move it in the direction of the primary shaft 31) using an actuator 60. The output of the actuator 60 can move the movable flange 32b both in the direction that narrows the groove width of the primary sheave 32 (i.e. , to the Top side), and in the direction that widens the groove width (i.e., to the Low side). Thus, it is possible to freely adjust the groove width.

The actuator 60 in this embodiment is an electric motor. The output of the electric motor 60 is controlled by the power supplied to the electric motor 60. That is, the electric motor 60 converts the electric energy supplied thereto into mechanical energy, and outputs it to the movable flange 32b, thereby moving the movable flange 32b.

The actuator 60 that adjusts the groove width of the primary sheave 32 is electrically connected to the control device (shift control device) 10. The control device 10 is structured by an electronic control device (ECU; Electronic Control Unit). The electronic control device (ECU) is configured by a microcomputer (MPU), for example. The control device 10 performs control such that it calculates the speed change ratio corresponding to a vehicle running condition (such as vehicle speed, throttle opening degree) based on a control map (program) that has been registered in advance, and issues to the continuously variable transmission 30 a shift command to achieve the speed change ratio, thereby finally achieving the speed change ratio.

The actual control is performed such that a target value of the speed change ratio (target speed change ratio) is calculated from the control map based on information about the vehicle speed and the throttle opening, and the position of the movable sheave of the primary sheave is controlled by driving the electric motor 60 so as to achieve the target speed change ratio. The control map is stored in a memory unit provided in the control device 10. Alternatively, a memory unit that is electrically connected to the control device 10 may be provided outside of the control device 10, and the control map may be stored in the memory unit. The memory unit may be configured by, for example, a semiconductor memory (a RAM, a flash memory, or the like) or a hard disc.

In a continuously variable transmission that is electronically controlled as described above, a plurality of shift characteristics can be set by preparing a plurality of control maps. In the continuously variable transmission 30 of the embodiment, two shift characteristics that can be appropriately changed in accordance with the intention of the rider are set.

In the embodiment, a plurality of driving modes for controlling the continuously variable transmission 30 are set in the control device 10. In addition, the control device 10 performs a first control 11, a second control 12, and a third control 13. The control device 10 performs various controls in accordance with a program set in advance.

The first control 11 is a control for switching the driving mode, before the start of the engine 20, to a determined driving mode (A) among the plurality of driving modes (A, B) that has been determined in advance. The second control 12 is a control for switching between the plurality of driving modes (A, B) in response to operation of a mode switching operation member 27. The third control 13 is a control for limiting the second control 12 and inhibiting switching from the determined driving mode (A) to the other driving mode (B) when it is detected that the engine has not been started.

Here, the "determined driving mode" is a driving mode that has been determined in advance among the plurality of driving modes set in the control device 10. In the embodiment, it is also referred to as "normal mode" or "initial mode" as appropriate.

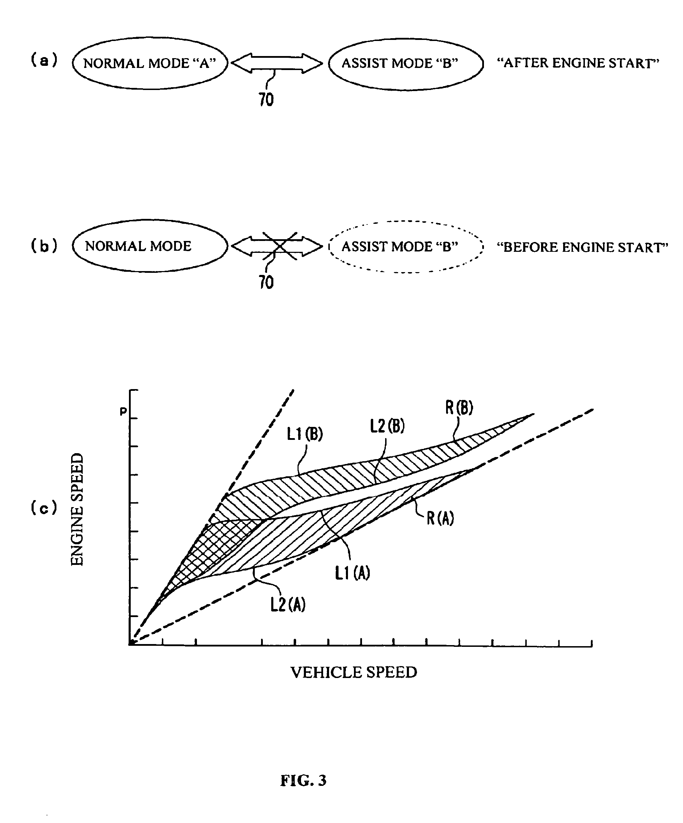

As shown in FIG. 3 (a), two driving modes, i.e. , a normal mode "A" and an assist mode "B" are used in the continuously variable transmission 30 of the embodiment. Note that "driving mode" as used herein is a term that denotes the shift characteristics (a shifting method) set for the continuously variable transmission. To briefly explain the characteristics of each of the driving modes, the normal mode "A" is a driving mode in which the engine speed in the shift region is set low aiming to reduce fuel consumption, noise, etc. (an economy mode). On the other hand, the assist mode "B" is a driving mode in which the engine speed in the shift region is set higher than that in the normal mode "A" so as to give priority to output performance of the engine (a power mode).

As shown in FIG. 3 (c), the normal mode "A" and the assist mode "B" have different shift characteristic diagrams (control maps) as shown by the vehicle speed-engine speed diagrams. In FIG. 3(c), R(A) shows the shift characteristic (control map) that is set in the normal mode "A", and R(B) shows the shift characteristic (control map) that is set in the assist mode "B". The figure indicates that, at the same vehicle speed, as the engine speed becomes higher, the speed change ratio of the continuous variable transmission is set to be larger (to the Low side).

As is obvious from comparison of the shift characteristics (control maps) of the normal mode "A" and the assist mode "B", at the same vehicle speed, the engine speed of the normal mode "A" is set to be lower than that of the assist mode "B". That is, the speed change ratio in the normal mode "A" is set to be smaller (to the Top side) than that in the assist mode "B".

The control device 10 switches the driving mode to the determined driving mode (A) among the plurality of driving modes (A, B) that has been determined in advance, before the start of the engine 20 (the first control). Further, the control device 10 switches between the plurality of driving modes (A, B) in response to operation of the mode switching operation member 27 (the second control). Furthermore, when the control device 10 detects that the engine has not been started, it limits the second control 12 and inhibits switching from the determined driving mode (A) to the other driving mode (B)(the third control).

In this embodiment, as shown in FIG. 3 (a), the control device 10 switches between the plurality of driving modes (here, the normal mode "A" and the assist mode "B") in response to the rider operating the mode switching operation member 27 that is provided separately from the accelerator operation member 25. That is, the normal mode "A" and the assist mode "B" can be switched between (arrow "70") in accordance with the intention of the rider (typically, by manually operating buttons). Thus, an optimal driving mode reflecting the intention of the rider can be selected, and the rider can enjoy comfortable driving.

Further, in this embodiment, as shown in FIG. 3(b), the control device 10 is configured such that it can selectively fix the driving mode (shift characteristics) of the continuously variable transmission 30 in the initial mode in the state where the engine 20 is turned off. The "initial mode" as used herein is a driving mode that is set to have the smallest speed change ratio (to the Top side) among the plurality of driving modes (shift characteristics) set in the continuously variable transmission. That is, in this embodiment, the normal mode "A", which is set to have a smaller speed change ratio (to the Top side) than the assist mode "B", corresponds to the initial mode.

More specifically, when the control device 10 detects that the engine 20 has not yet been started, it issues a mode switching inhibition command, thereby inhibiting switching from the normal mode "A" (initial mode), to which the driving mode has been shifted before the start of the engine 20, to the assist mode "B" (driving mode other than the initial mode).

In this embodiment, as described above, the actual control is performed using the control maps (R(A), R(B)) as shown in FIG. 3(c). More specifically, the target value of the speed change ratio (target speed change ratio) is calculated from the control maps (R(A), R(B)) of the respective driving modes, based on information about the vehicle speed and the throttle opening degree, and the electric motor 60 is driven to achieve the target speed change ratio, thereby controlling the position of the movable sheave of the primary sheave. Note that the control map R (A) shows the control map of the normal mode "A", and the control map R(B) shows the control map of the assist mode "B". Further, the control map R (A) and the control map R (B) indicate a region (control region) that is defined by the control maps. This control region is the region surrounded by line L1 (A) and line L1(B), which indicate the relationship between the vehicle speed and the target value of the engine speed when the throttle valve is fully opened, and by line L2(A) and line L2(B), which indicate the relationship between the vehicle speed and the target value of the engine speed when the throttle valve is fully closed.

For example, if the control is performed based on the control map R (A) while the vehicle is running in the normal mode "A", the target value of the engine speed is calculated by computation based on information about the vehicle speed and the throttle opening degree. More specifically, the position of the horizontal axis in FIG. 3(c) is determined based on the information about the vehicle speed. Then, the target value of the engine speed is determined within the region of the map R (A) in accordance with the throttle opening degree. In this case, as the throttle opening increases, the target value of the engine speed is increased (controlled to the Low side in order to increase the speed change ratio), and as the throttle opening degree reduces, the target value of the engine speed is reduced (controlled to the Top side in order to reduce the speed change ratio), thereby achieving smooth acceleration and deceleration. The control device 10 calculates the target value of the engine speed, while repeatedly performing the above-described computation based on the information about the vehicle speed and the throttle opening degree that change with time, thereby controlling the speed change ratio of the continuously variable transmission 30.

In the continuously variable transmission 30 as described above, when the speed change ratio reaches or exceeds a certain value, the clutch tends to engage along with an increase in the rotation speed of the secondary sheave. Hypothetically, if the target value of the engine speed is set such that the speed change ratio exceeds a value at which the clutch is caused to engage, setting the target value of the engine speed further to the Top side will reduce an abrupt sensation that is felt when engine brake is applied immediately after the clutch engagement. As is apparent from comparison of the control map R(A) and the control map R(B) of the example in the figure, the control map R (A) is set such that the speed change ratio is smaller (to the Top side) than that in the control map R(B). Accordingly, the control based on the control map R (A) can more effectively reduce the abrupt sensation felt when engine brake is applied.

Note that in the embodiment, the normal mode "A" is set as the initial mode. However, the normal mode "A" may be set to another driving mode among the plurality of driving modes, as long as it is a driving mode in which the speed change ratio is set to be reduced (to the Top side). The number of the driving modes that can be set is not limited to two, and three or more of the driving modes may be set in the continuously variable transmission 30. For example, a third driving mode, in which the speed change ratio is set further to the Top side than the normal mode "A", may be set and used as the initial mode.

Further, the embodiment employs a method of switching between the driving modes in which the driving modes are switched by switching the control maps. However, the method of switching between the driving modes is not limited to this. For example, the shift characteristics may be changed, not by switching the control maps, but by multiplication with a determined conversion factor. More specifically, the target speed change ratio calculated from a determined control map may be multiplied by the determined conversion factor (for example, 1.35), thus making it possible to switch to shift characteristics where the speed change ratio is increased (shifted to the Low side) (a "shift-down mode"). In this case, the number of the shift-down modes may be set to one. Alternatively, a configuration may be adopted in which two or more shift-down modes are set, and shift-down is performed such that the speed change ratio is sequentially increased (shifted to the Low side) in response to a button operation by the rider (a "multi-speed shift-down mode"). Note that the determined conversion factor is stored in the form of a factor map in the memory unit that is provided inside or outside of the control device.

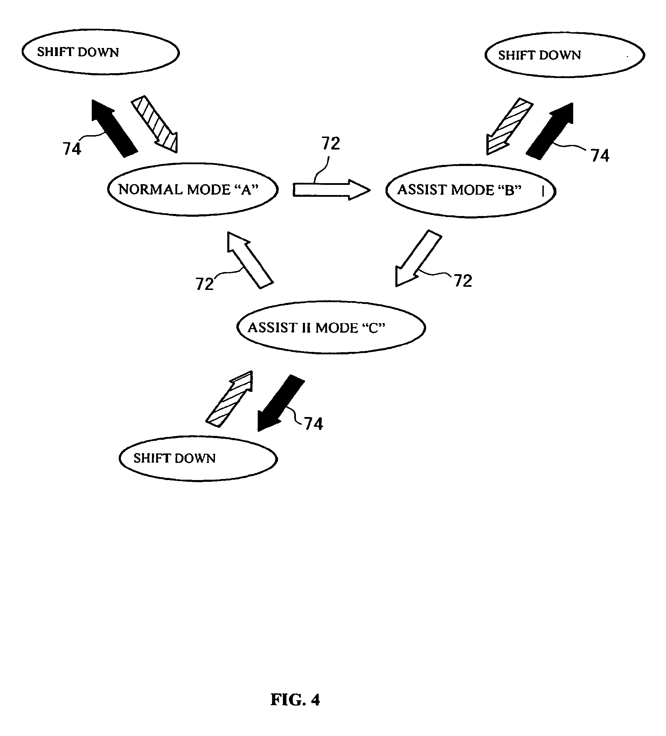

FIG. 4 illustrates another embodiment that shows an example of the method of switching between the driving modes. As shown in FIG. 4, the switching between the driving modes may be performed by a combination of switching of the driving modes based on the control maps, and the shift-down mode set by multiplication with a conversion factor. In the example shown in FIG. 4, three driving modes (i.e., the normal mode "A", the assist mode "B", and an assist II mode "C") can be sequentially switched between in response to the rider operating the mode switching operation member 27 (refer to arrows 72 in FIG. 4). In addition, a configuration is adopted in which each of the driving modes can be shifted to a shift-down state (refer to arrows 74 in FIG. 4). Even in this case, it is possible to inhibit the occurrence of the unpleasant sensation when the clutch is engaged, by fixing the driving mode in the normal mode "A" (i.e., the driving mode that is set to have the smallest speed change ratio (to the Top side)) before starting the engine.

Now, referring back to FIG. 2, the configuration of the embodiment of the invention, particularly, the control performed by the control device of the continuously variable transmission will be described in detail.

The straddle-type vehicle 100 includes an engine speed sensor 22 for detecting the speed of the engine 20. The control device 10 detects whether the engine 20 has not yet been started based on whether the engine speed detected by the engine speed sensor 22 is 0.

In this embodiment, the engine speed sensor 22 for detecting the speed of the engine 20 is electrically connected to the control device 10, and outputs an engine speed signal to the control device 10. When the control device 10 detects that the engine 20 has not yet been started via the engine speed sensor 22, it issues a mode switching inhibition command. More specifically, the mode switching inhibition command is issued based on the engine speed signal (more specifically, the engine speed signal indicating that the engine speed is "0") output from the engine speed sensor 22. Note that the mode switching inhibition command is not limited to the engine speed signal output from the engine speed sensor 22. A configuration may be adopted in which the mode switching inhibition command is issued based on other information that indicates that the engine has not yet been started (for example, by determining whether or not ignition or injection has been performed based on "ON" of a main switch).

Further, a rear wheel speed sensor 52 for detecting the speed of the rear wheel 40 is electrically connected to the control device 10. The rear wheel speed sensor 52 is disposed in the vicinity of the rear wheel 40, and outputs a rear wheel speed signal to the control device 10. The vehicle speed can be obtained from the rear wheel speed signal.

Furthermore, a mode switching switch (mode switching SW), serving as the mode switching operation member 27, is electrically connected to the control device 10. The switching among the plurality of driving modes is performed by the rider turning on the mode switching switch. The mode switching switch may be, for example, a mode switching button having a button shape.

In addition, a sheave position detecting device 29 for detecting the flange position of the movable flange 32b of the primary sheave 32 is connected to the control device 10. The sheave position detecting device 29 is capable of outputting information about the position of the movable flange (a movable flange position signal) to the control device 10. The control device 10 uses the information about the flange position (the movable flange position signal) to control the electric motor 60. Note that a variety of signals (for example, a throttle opening signal, a secondary sheave rotation speed signal, etc.), as well as the rear wheel speed signal, the engine speed signal, the movable flange position signal, are input to the control device 10.

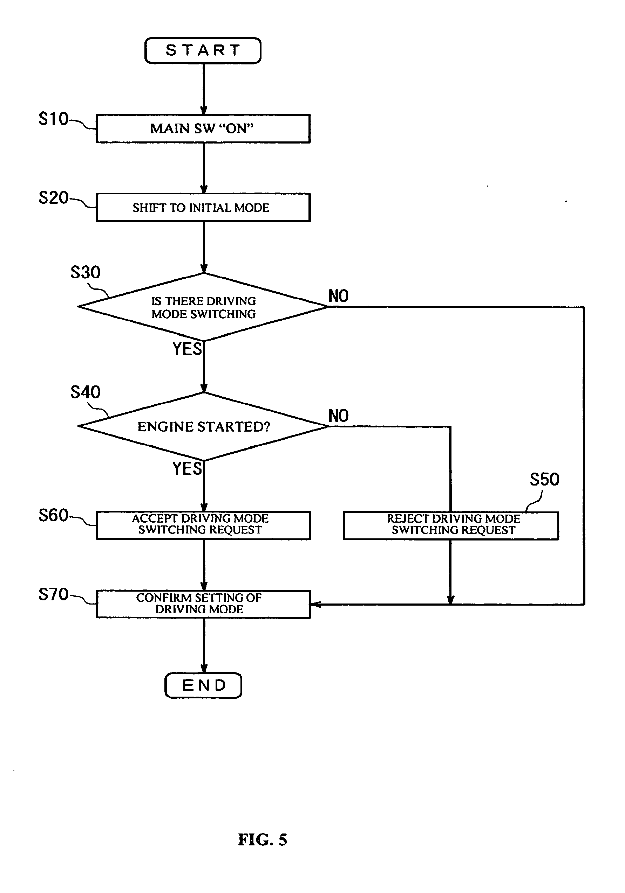

A control method of the control device 10 will now be described with reference to the flowchart in FIG. 5.

First, the control device 10 switches the driving mode, before the start of the engine 20, to the determined driving mode (A) among the plurality of driving modes (A, B) that has been determined in advance (the first control). In this embodiment, the control device 10 proceeds to step S20 when the main switch (the main power source of the vehicle 100) is turned "ON" at step S10, and the driving mode is shifted to the initial mode (here, the normal mode "A").

When the control device 10 detects that the engine has not yet been started, it limits the second control 12 and inhibits switching from the determined driving mode (A) to the other driving mode (B) (the third control). In this embodiment, the control device 10 determines whether or not there is a driving mode switching request (here, a switching request to the assist mode "B") (step S30). When it is determined that there is the driving mode switching request, then it is determined at step S40 whether or not the engine 20 has been started. In this case, when it is determined that the engine 20 has not yet been started, the process proceeds to step S50 where the mode switching request is rejected, and the driving mode is confirmed and set to the initial mode (the normal mode "A") maintained (step S70).

On the other hand, when it is determined at step S40 that the engine 20 has been started, the routine proceeds to step S60 where the mode switching request is accepted, and the switching from the initial mode (the normal mode "A") to the other mode (the assist mode "B") is performed, and the driving mode is confirmed and set in this state (step S70).

In this manner, the driving mode when the engine is started can be fixed in the initial mode (the normal mode "A"). Note that, in the example described here, the driving mode is shifted to the initial mode when the main switch is turned "ON". However, it is sufficient if the driving mode is shifted to the initial mode before the start of the engine. Therefore, the timing for the shift to the initial mode is not limited to when the main switch is turned "ON". For example, it is acceptable to adopt a configuration in which the shift to the initial mode is performed at the timing when the engine is turned off, such that when the main switch is turned "ON" next time, the shift to the initial mode has already been completed. Alternatively, it is also acceptable to adopt a configuration in which the shift to the initial mode is performed when the main switch is turned "OFF", such that when the main switch is turned "ON" next time, the shift to the initial mode has already been completed.

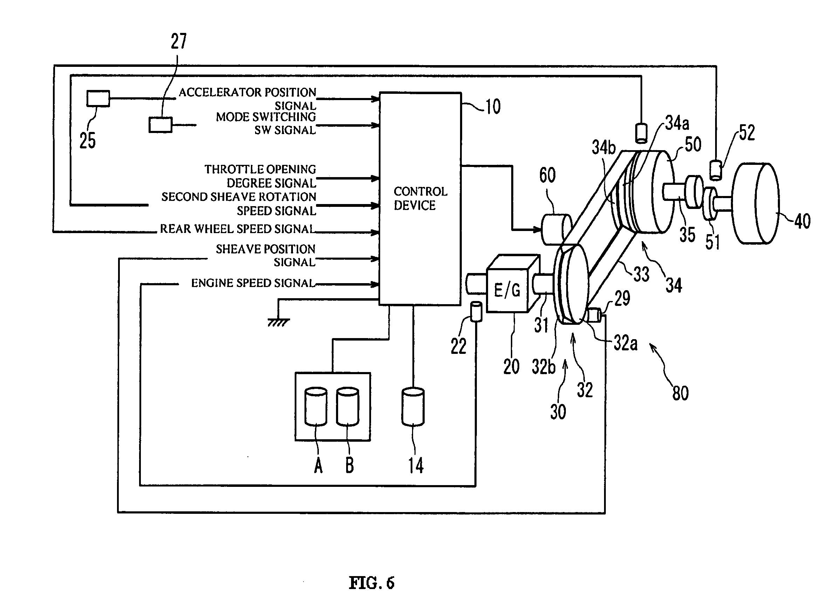

Another embodiment of the invention will now be described with reference to FIG. 6. This embodiment is different from the above-described embodiment in that the shift to the initial mode is not performed before the start of the engine, but performed immediately after the start of the engine. Accordingly, structural members that are the same or similar to those of the straddle-type vehicle 100 are denoted by the same or similar reference numerals and a repeated explanation thereof will be omitted.

In this embodiment, when the control device 10 detects that the engine 20 has just been started and when the driving mode has not been shifted to the determined driving mode (A) among the plurality of driving modes (A, B) that has been determined in advance, the control device 10 switches the driving mode to the determined driving mode (A) (a forth control 14).

In this embodiment, the control device 10 is configured such that it detects the state where the engine 20 has just been started, and based on the detection result, the control device 10 can perform control to switch the driving mode to the initial mode (the normal mode "A") from the other driving mode (the assist mode "B"). That is, switching of the driving mode is permitted before the engine start, but the driving mode is shifted to the initial mode in accordance with the timing of the engine start. Even with the configuration described above, it is possible to start running the vehicle in the initial mode (the normal mode "A"), in which the speed change ratio is set to be reduced (to the Top side), after the start of the engine. Thus, it is possible to reduce the unpleasant sensation caused by the inconsistency between the rider's operation and the actual movement of the vehicle.

Note that, in this embodiment, the control device 10 detects whether or not the engine 20 has just been started, based on whether or not the speed of the engine 20 has increased from 0. That is, the control device 10 can detect the state where the engine 20 has just been started, via the engine speed sensor 22. More specifically, the control device 10 performs control that switches the driving mode to the initial mode (the normal mode "A") from the other driving mode (the assist mode "B") in response to the engine speed signal indicating that the engine speed has been increased from "0".

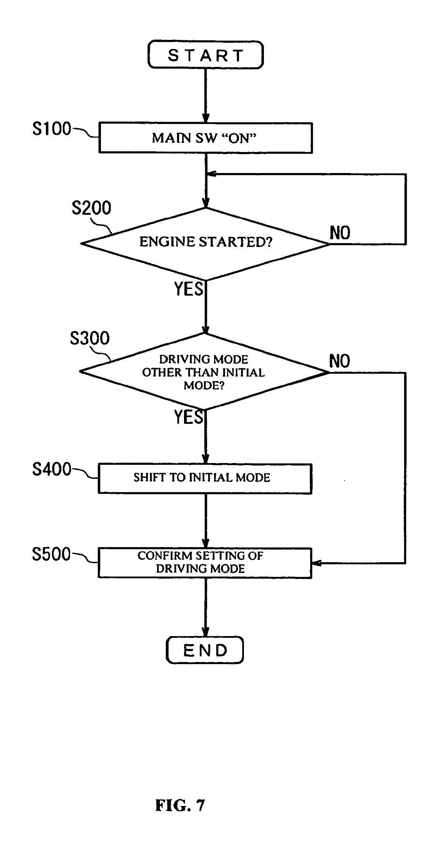

A control method of the control device 10 will now be described with reference to FIG. 7. First, when the main switch (the main power source of the vehicle 100) is turned "ON" at step S100, the routine proceeds to step S200 where the control device 10 determines whether or not the engine 20 has been started. The determination at step S200 is repeatedly performed at short intervals (every 0.05 seconds (for example, 50 ms) in this embodiment), until it is determined that the engine has been started.

When it is determined at step S200 that the engine has been started, the control device 10 determines at step S300 whether or not the current driving mode is a driving mode other than the initial mode (the normal mode "A"). When it is determined at step S300 that the current driving mode has already been set to the initial mode (the normal mode "A"), the routine proceeds to step S500, and the initial mode (the normal mode "A") is maintained and the driving mode is confirmed and set as it is.

On the other hand, when it is determined at step S300 that the current driving mode is a driving mode other than the initial mode (the normal mode "A"), namely, the assist mode "B", the switching to the initial mode (the normal mode "A") from the other switching mode (the assist mode "B") is performed (step S400), and the driving mode is confirmed and set as it is (step S500).

In the above-described configuration, even if the driving mode is switched to a driving mode other than the initial mode (the normal mode "A") after the main switch is turned "ON", it is possible to surely switch the diving mode to the initial mode immediately after the engine start. In addition, the determination at step S200 as to whether or not the engine has been started is repeatedly executed at very short intervals (for example, 50 ms). Accordingly, even if the driving mode is switched after the engine start, it does not affect the actual change in the speed change ratio.

The invention is not limited to the above-described embodiments.

For example, the structure of the continuously variable transmission 30 is not limited to those described in the above-described embodiments. For example, the invention may be applied to various continuously variable transmissions that have a structure in which a V-belt is wound around a primary sheave and a secondary sheave, and an actuator and a control device are used to adjust the groove width of the primary sheave.

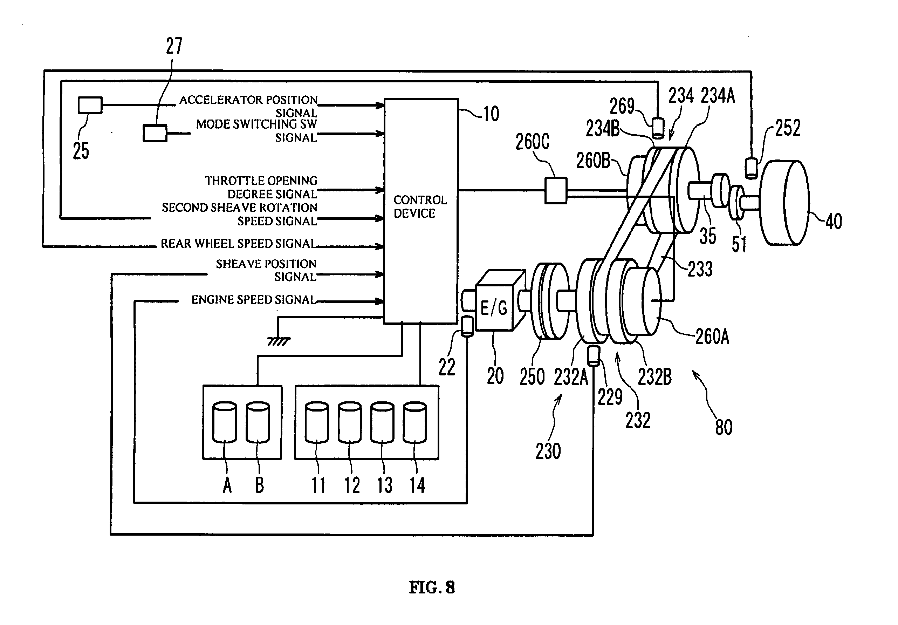

As the above-described continuously variable transmission, it is possible to adopt, for example, the continuously variable transmission shown in FIG. 8 that includes a metal belt as the V-belt. Note that, structural members and sections of the continuously variable transmission shown in FIG. 8 that effect the same operation as those in the continuously variable transmissions of the embodiments shown in FIG. 2 and FIG. 6 are denoted by the same reference numerals.

In this embodiment, a continuously variable transmission 230 including a metal belt as the V-belt (hereinafter also referred to as a "metal belt CVT" appropriately) is modified in various ways, in addition to including a metal belt 233 as the V-belt, as shown in FIG. 8.

The meal belt CVT 230 includes a clutch 250, a primary rotation sensor 229, and an actuator. In this embodiment, the actuator is structured by hydraulic cylinders 260A, 260B, and a hydraulic control valve 260C.

The clutch 250 is disposed between an output shaft of the engine 20 and an input shaft of the metal belt CVT 230. The clutch 250 connects/disconnects transmission of power between the output shaft of the engine 20 and the input shaft of the metal belt CVT 230.

The primary rotation sensor 229 detects the rotation speed of a primary sheave 232. In this embodiment, the control device 10 computes the speed change ratio of the continuously variable transmission 230 using the ratio of the rotation speed of the primary sheave 232 detected by the primary rotation sensor 229 and the vehicle speed of the straddle-type vehicle detected by a vehicle speed sensor (a rear wheel speed sensor in the figure) 252. Note that, the speed change ratio of the continuously variable transmission 230 may be computed using the ratio between the rotation speed of the primary sheave 232 detected by the primary rotation sensor 229 and the rotation speed of a secondary sheave 234 detected by a secondary sheave rotation speed sensor 269.

The hydraulic cylinder 260A adjusts the groove width of the primary sheave 232. In this embodiment, the hydraulic cylinder 260A adjusts the groove width of the primary sheave 232 by applying a pressing force to a movable flange 232B of the primary sheave 232. Further, the hydraulic cylinder 260B adjusts the groove width of the secondary sheave 234. In this embodiment, the hydraulic cylinder 260B adjusts the groove width of the secondary sheave 234 by applying a pushing force to a movable flange 234B of the secondary sheave 234. The hydraulic control valve 260C is a valve that adjusts the hydraulic pressure applied to the hydraulic cylinders 260A, 260B. The hydraulic control valve 260C performs control such that, when the hydraulic pressure of one hydraulic cylinder 260A (260B) of the hydraulic cylinders 260A, 260B is increased, the hydraulic pressure of the other hydraulic cylinder 260B (260A) is reduced. The hydraulic control valve 260C is controlled by the control device 10.

The speed change ratio of the metal belt CVT 230 is changed by the control device 10 operating the hydraulic control valve 260C. The control device 10 controls the metal belt CVT 230 in a similar manner to controlling the continuously variable transmission 30. In the metal belt CVT 230 according to the embodiment, the control device 10 uses the rotation speed of the primary sheave 232 as a control target value, instead of using the engine speed as the control target value.

In this embodiment, a fourth control 14 is combined with the first control 11, the second control 12, and the third control 13 described above. That is, the control device performs the first control 11, the second control 12, the third control, and the fourth control, respectively, as shown in FIG. 8. In the first control 11, before the start of the engine, the driving mode is switched to a determined driving mode among a plurality of driving modes that has been determined in advance. In the second control 12, the plurality of driving modes are switched between in response to operation of the mode switching operation member 27. In the third control 13, when the control device detects that the engine has not yet been started, it limits the second control, and inhibits switching from the determined driving mode to another driving mode. In the fourth control 14, when the control device detects that the engine has just been started and when the driving mode has not been switched to the determined driving mode, the control device switches the driving mode to the determined driving mode.

With the above-described configuration, even if the driving mode cannot be fixed in the determined driving mode (A) before the start of the engine because of some mechanical failure, the driving mode can be switched to the determined driving mode (A) immediately after the start of the engine by the fourth control 14. Further, even when the fourth control 14 does not function, the driving mode can be fixed in the driving mode (A) before the start of the engine by the first control to the third control.

Although the straddle-type vehicle 100 shown in FIG. 1 is a scooter motorcycle, the invention is not limited to this. The invention may be applied to a straddle-type vehicle as long as it is provided with a control device that electronically controls shifting of a continuously variable transmission. For example, the invention may be applied to a four-wheel buggy (ATV: All Terrain Vehicle), a snow mobile etc., as well as to a scooter motorcycle. Note that, in the case of a four-wheel buggy or the like, as an accelerator operation member, a lever may be used instead of an accelerator grip. Moreover, although the internal combustion engine is used as an engine, it is also possible to employ a straddle-type vehicle provided with a motor.

The invention has been described above based on the preferred embodiments. However, the invention is not limited by the description, and it will be obviously apparent that the invention permits of various modified forms.

According to the invention, it is possible to provide a straddle-type vehicle capable of sufficiently ensuring drivability when starting on a downward slope.

### Description of the Reference Numerals and Signs

10 Control device
11 First control
12 Second control
13 Third control
14 Fourth control
20 Engine
22 Engine speed sensor
25 Accelerator operation member
27 Mode switching operation member
29 Sheave position detecting device
30 Continuously variable transmission
31 Rotating shaft
32 Primary sheave
32b Movable flange
33 Belt
34 Secondary sheave
34b Movable flange
35 Rotating shaft
40 Rear wheel
50 Centrifugal clutch
52 Rear wheel speed sensor
60 Electric motor
80 Power unit
100 Straddle-type vehicle
229 Primary rotation sensor
230 Metal belt CVT (Continuously variable transmission)
232 Primary sheave
232B Movable flange
233 Metal belt
234 Secondary sheave
234B Movable flange
250 Clutch
260A Hydraulic cylinder
260B Hydraulic cylinder
260C Hydraulic control valve
269 Secondary sheave rotation speed sensor

## Claims

1. A continuously variable transmission (30) comprising a control device (10) having a plurality of driving modes set therein, wherein the control device (10) is adapted to perform:
a first control (11) that switches the driving mode, before start of an engine (20), to a determined driving mode among the plurality of driving modes that has been determined in advance;
a second control (12) that switches between the plurality of driving modes in response to operation of a mode switching operation member (27); and
a third control (13) that limits the second control (12) and inhibits switching from the determined driving mode to another driving mode, when the control device (10) detects that the engine (20) has not been started.

2. The continuously variable transmission (30) according to claim 1, wherein, when the control device (10) detects that the engine (20) has just been started and when the switching to the determined driving mode has not been performed, the control device (10) is adapted to perform a fourth control (14) that switches the driving mode to the determined driving mode.

3. The continuously variable transmission (30) according to claim 1 or 2, wherein the control device (10) is adapted to detect whether the engine (20) has not been started based on whether the rotation speed of the engine (20) detected by an engine speed sensor (22) is zero.

4. A continuously variable transmission (30) comprising a control device (10) having a plurality of driving modes set therein, wherein the control device (10) is configured such that when it detects that an engine (20) has just been started and the driving mode has not been switched to a determined driving mode among the plurality of driving modes that has been determined in advance, based on the detection result the control device (10) performs a fourth control (14) that switches the driving mode to the determined driving mode.

5. The continuously variable transmission (30) according to claim 2, 3 or 4, wherein the control device (10) detects whether the engine (20) has just been started based on whether a rotation speed of the engine (20) has increased from zero.

6. The continuously variable transmission (30) according to any preceding claim, wherein a speed change ratio in the determined driving mode is set further to a TOP side than that in the driving modes among the plurality of driving modes other than the determined driving mode.

7. The continuously variable transmission (30) according to any preceding claim, wherein the continuously variable transmission (30) comprises a belt type continuously variable transmission in which a belt (33) is wound around a V-groove of a primary sheave (32) and a V-groove of a secondary sheave (34), and a speed change ratio is continuously and steplessly controlled by changing a groove width of each sheave (32, 34).

8. The continuously variable transmission (30) according to claim 7, wherein the primary sheave (32) includes a fixed flange (32a) and a movable flange (32b) disposed on a primary shaft (31) to which output of the engine (20) can be transmitted;
the secondary sheave (34) includes a fixed flange (34a) and a movable flange (34b) disposed on a secondary shaft (35) that can transmit power to a rear wheel (40) via a centrifugal clutch (50); and
the groove width of the primary sheave (32) is adjusted by an actuator controlling movement of the movable flange (32b) thereof, and the movable flange (34b) of the secondary sheave (34) is urged in a direction that narrows the groove width.

9. The continuously variable transmission (30) according to claim 7 or 8, wherein the belt comprises a metal belt (233).

10. The continuously variable transmission (30) according to claim 7, 8 or 9, wherein the groove width of the primary sheave and the groove width of the secondary sheave are respectively adjusted by hydraulic cylinders.

11. A vehicle (100) comprising:
an engine (20); and
a continuously variable transmission (30) according to any preceding claim and connected to the engine (20).

12. The vehicle (100) according to claim 11, further comprising a mode switching operation member (27).

13. The vehicle (100) according to claim 11 or 12, wherein the engine (20) produces an output that is controlled in response to an accelerator operation member (25).

14. A power unit (80) comprising:
an engine (20); and
a continuously variable transmission (30) according to any one of claims 1 to 10 and connected to the engine (20).

15. The vehicle (100) according to any one of claims 11 to 13, or the power unit (80) according to claim 14, wherein a clutch is disposed on a primary shaft to which output of the engine is transmitted.

16. The vehicle (100) according to any one of claims 11 to 13 or 15, or the power unit (80) according to claim 14 or 15, further comprising an engine speed sensor (22) adapted to detect a rotation speed of the engine (20).

## Patentansprüche

1. Kontinuierlich veränderliches Getriebe (30), das eine Steuerungseinheit (10) umfasst, die eine Vielzahl von Fahrmodi hat, die in derselben eingestellt sind, wobei die Steuerungseinheit (10) dafür eingerichtet ist, Folgendes auszuführen:
eine erste Steuerung (11), die, vor dem Start eines Motors (20), den Fahrmodus zu einem vorbestimmten Fahrmodus unter der Vielzahl von Fahrmodi, der im Voraus festgelegt worden ist, schaltet,
eine zweite Steuerung (12), die als Reaktion auf eine Betätigung eines Modusumschaltung-Betätigungselementes (27) zwischen der Vielzahl von Fahrmodi umschaltet, und
eine dritte Steuerung (13), welche die zweite Steuerung (12) begrenzt und ein Umschalten von dem festgelegten Fahrmodus zu einem anderen Fahrmodus verhindert, wenn die Steuerungseinheit (10) erkennt, dass der Motor (20) nicht gestartet worden ist.

2. Kontinuierlich veränderliches Getriebe (30) nach Anspruch 1, wobei die Steuerungseinheit (10) dafür eingerichtet ist, eine vierte Steuerung (14) auszuführen, die den Fahrmodus zu dem festgelegten Fahrmodus umschaltet, wenn die Steuerungseinheit (10) erkennt, dass der Motor (20) gerade gestartet worden ist, und wenn das Umschalten zu dem festgelegten Fahrmodus nicht ausgeführt worden ist.

3. Kontinuierlich veränderliches Getriebe (30) nach Anspruch 1 oder 2, wobei die Steuerungseinheit (10) dafür eingerichtet ist, auf der Grundlage dessen, ob die Drehzahl des Motors (20), die durch einen Motordrehzahlsensor (22) erfasst wird, null ist, zu erkennen, ob der Motor (20) nicht gestartet worden ist.

4. Kontinuierlich veränderliches Getriebe (30), das eine Steuerungseinheit (10) umfasst, die eine Vielzahl von Fahrmodi hat, die in derselben eingestellt sind, wobei die Steuerungseinheit (10) derart konfiguriert ist, dass die Steuerungseinheit (10) auf der Grundlage des Erkennungsergebnisses eine vierte Steuerung (14) ausführt, die den Fahrmodus zu dem festgelegten Fahrmodus umschaltet, wenn sie erkennt, dass der Motor (20) gerade gestartet worden ist und der Fahrmodus nicht zu einem vorbestimmten Fahrmodus unter der Vielzahl von Fahrmodi, der im Voraus festgelegt worden ist, geschaltet worden ist.

5. Kontinuierlich veränderliches Getriebe (30) nach Anspruch 2, 3 oder 4, wobei die Steuerungseinheit (10) auf der Grundlage dessen, ob eine Drehzahl des Motors (20) von null aus zugenommen hat, erkennt, ob der Motor (20) gerade gestartet worden ist.

6. Kontinuierlich veränderliches Getriebe (30) nach einem der vorhergehenden Ansprüche, wobei ein Geschwindigkeitsänderungsverhältnis in dem festgelegten Fahrmodus weiter zu einer TOP-Seite eingestellt ist als dasjenige in den von dem festgelegten Fahrmodus unterschiedenen Fahrmodi unter der Vielfalt von Fahrmodi.

7. Kontinuierlich veränderliches Getriebe (30) nach einem der vorhergehenden Ansprüche, wobei das kontinuierlich veränderliche Getriebe (30) ein kontinuierlich veränderliches Riemengetriebe umfasst, bei dem ein Riemen (33) um eine Keilrille einer Primärscheibe (32) und eine Keilrille einer Sekundärscheibe (34) gewunden ist, und ein Geschwindigkeitsänderungsverhältnis kontinuierlich und stufenlos durch das Verändern einer Rillenbreite jeder Scheibe (32, 34) geregelt wird.

8. Kontinuierlich veränderliches Getriebe (30) nach Anspruch 7, wobei die Primärscheibe (32) einen unbeweglichen Flansch (32a) und einen beweglichen Flansch (32b), angeordnet an einer Primärwelle (31), zu der eine Ausgangsleistung des Motors (20) übertragen werden kann, einschließt,
wobei die Sekundärscheibe (34) einen unbeweglichen Flansch (34a) und einen beweglichen Flansch (34b), angeordnet an einer Sekundärwelle (35), die eine Leistung über eine Fliehkraftkupplung (50) zu einem Hinterrad (40) übertragen kann, einschließt, und
wobei die Rillenbreite der Primärscheibe (32) durch ein Stellelement eingestellt wird, das die Bewegung des beweglichen Flanschs (32b) derselben steuert, und der bewegliche Flansch (34b) der Sekundärscheibe (34) in einer Richtung geschoben wird, welche die Rillenbreite verengt.

9. Kontinuierlich veränderliches Getriebe (30) nach Anspruch 7 oder 8, wobei der Riemen einen Metallriemen (233) umfasst.

10. Kontinuierlich veränderliches Getriebe (30) nach Anspruch 7, 8 oder 9, wobei die Rillenbreite der Primärscheibe und die Rillenbreite der Sekundärscheibe jeweils durch Hydraulikzylinder eingestellt werden.

11. Fahrzeug (100), das Folgendes umfasst:
einen Motor (20) und
ein kontinuierlich veränderliches Getriebe (30) nach einem der vorhergehenden Ansprüche und verbunden mit dem Motor (20).

12. Fahrzeug (100) nach Anspruch 11, das ferner ein Modusumschaltung-Betätigungselement (27) umfasst.

13. Fahrzeug (100) nach Anspruch 11 oder 12, wobei der Motor (20) eine Leistungsabgabe erzeugt, die als Reaktion auf ein Gas-Betätigungselement (25) geregelt wird.

14. Antriebsaggregat (80), das Folgendes umfasst:
einen Motor (20) und
ein kontinuierlich veränderliches Getriebe (30) nach einem der Ansprüche 1 bis 10 und verbunden mit dem Motor (20).

15. Fahrzeug (100) nach einem der Ansprüche 11 bis 13 oder Antriebsaggregat (80) nach Anspruch 14, wobei eine Kupplung an einer Primärwelle, zu der die Leistungsabgabe des Motors übertragen wird, angeordnet ist.

16. Fahrzeug (100) nach einem der Ansprüche 11 bis 13 oder 15 oder Antriebsaggregat (80) nach Anspruch 14 oder 15, das ferner einen Motordrehzahlsensor (22) umfasst, der dafür eingerichtet ist, eine Drehzahl des Motors (20) zu erfassen.

## Revendications

1. Transmission à variation continue (30), comprenant un dispositif de commande (10) comportant plusieurs modes d'entraînement qui y sont réglés, le dispositif de commande (10) étant adapté pour exécuter les commandes ci-dessous :
une première commande (11) consistant à commuter le mode d'entraînement, avant le démarrage du moteur (20), vers un mode d'entraînement déterminé parmi les plusieurs modes d'entraînement, ayant été déterminé d'avance ;
une deuxième commande (12), consistant à assurer la commutation entre les plusieurs modes d'entraînement en réponse à l'actionnement d'un élément d'actionnement de la commutation du mode (27) ; et
une troisième commande (13), consistant à limiter la deuxième commande (12) et à empêcher la commutation du mode d'entraînement déterminé vers un autre mode d'entraînement lorsque le dispositif de commande (10) détecte que le moteur (20) n'a pas été démarré.

2. Transmission à variation continue (30) selon la revendication 1, dans laquelle, lorsque le dispositif de commande (10) détecte que le moteur (20) a juste été démarré, la commutation vers le mode d'entraînement déterminé n'ayant pas été exécutée, le dispositif de commande (10) est adapté pour exécuter une quatrième commande (14), consistant à commuter le mode d'entraînement vers le mode d'entraînement détermine.

3. Transmission à variation continue (30) selon les revendications 1 ou 2, dans laquelle le dispositif de commande (10) est adapté pour détecter que le moteur (20) n'a pas été démarré sur la base du fait que la vitesse de rotation du moteur (20), détectée par un capteur de la vitesse du moteur (22), correspond à zéro.

4. Transmission à variation continue (30), comprenant un dispositif de commande (10) comportant plusieurs modes d'entraînement qui y sont réglés, le dispositif de commande (10) étant configuré de sorte que lorsqu'il détecte qu'un moteur (20) a juste été démarré, le mode d'entraînement n'ayant pas été commuté vers un mode d'entraînement déterminé parmi les plusieurs modes d'entraînement, déterminé d'avance, exécute, sur la base du résultat de la détection du dispositif de commande (10), une quatrième commande (14) consistant à commuter le mode d'entraînement vers le mode d'entraînement déterminé.

5. Transmission à variation continue (30) selon les revendications 2, 3 ou 4, dans laquelle le dispositif de commande (10) détecte que le moteur (20) a juste été démarré sur la base d'un accroissement de la vitesse de rotation du moteur (20) à partir de zéro.

6. Transmission à variation continue (30) selon l'une quelconque des revendications précédentes, dans laquelle un rapport de changement de vitesse dans le mode d'entraînement déterminé est réglé davantage vers le haut que celui des modes d'entraînement parmi les plusieurs modes d'entraînement, autres que le mode d'entraînement déterminé.

7. Transmission à variation continue (30) selon l'une quelconque des revendications précédentes, dans laquelle la transmission à variation continue (30) comprend une transmission à variation continue du type à courroie, dans laquelle une courroie (33) est enroulée autour d'une gorge en V d'une poulie primaire (32) et d'une gorge en V d'une poulie secondaire (34), un rapport de changement de vitesse étant contrôlé de manière continue et sans échelons en changeant une largeur de la gorge de chaque poulie (32, 34).

8. Transmission à variation continue (30) selon la revendication 7, dans laquelle la poulie primaire (32) englobe une bride fixe (32a) et une bride mobile (32b) agencées sur un arbre primaire (31), vers lequel peut être transmise la puissance de sortie du moteur (20) ;
la poulie secondaire (34) englobant une bride fixe (34a) et une bride mobile (34b) agencées sur un arbre secondaire (35), pouvant transmettre la puissance vers une roue arrière (40) par l'intermédiaire d'un embrayage centrifuge (50) ; et
la largeur de la gorge de la poulie primaire (32) étant ajustée par un actionneur, contrôlant le déplacement de la bride mobile (32b) de celle-ci, la bride mobile (34b) de la poulie secondaire (34) étant poussée dans une direction réduisant la largeur de la gorge.

9. Transmission à variation continue (30) selon les revendications 7 ou 8, dans laquelle la courroie comprend une courroie métallique (233).

10. Transmission à variation continue (30) selon les revendications 7, 8 ou 9, dans laquelle la largeur de la gorge de la poulie primaire et la largeur de la gorge de la poulie secondaire sont respectivement ajustées par des cylindres hydrauliques.

11. Véhicule (100), comprenant :
un moteur (20) ; et
une transmission à variation continue (30) selon l'une quelconque des revendications précédentes et connectée au moteur (20).

12. Véhicule (100) selon la revendication 11, comprenant en outre un élément d'actionnement de la commutation du mode (27).

13. Véhicule (100) selon les revendications 11 ou 12, dans lequel le moteur (20) produit une puissance de sortie contrôlée en réponse à un élément d'actionnement de l'accélérateur (25).

14. Bloc d'alimentation (80), comprenant :
un moteur (20) ; et
une transmission à variation continue (30) selon l'une quelconque des revendications 1 à 10, connectée au moteur (20).

15. Véhicule (100) selon l'une quelconque des revendications 11 à 13, ou bloc d'alimentation (80) selon la revendication 14, dans lequel un embrayage est agencé sur un arbre primaire vers lequel est transmise la puissance de sortie du moteur.

16. Véhicule (100) selon l'une quelconque des revendications 11 à 13 ou 15, ou bloc d'alimentation (80) selon les revendications 14 ou 15, comprenant en outre un capteur de la vitesse du moteur (22), adapté pour détecter une vitesse de rotation du moteur (20).
